# EUROPÄISCHE PATENTSCHRIFT

(11) **EP 0 618 434 B1**
(45) Veröffentlichungstag und Bekanntmachung des Hinweises auf die Patenterteilung: **02.01.1997**
(21) Anmeldenummer: 93116793.6
(22) Anmeldetag: 18.10.1993
(51) Int. Cl.: G01L 5/00, G01M 13/00

(54) **Verfahren zur Messung der Radialkraft eines Dichtringes**
Method for measuring the radial forces of a sealing ring
Méthode de mesure de la force radiale d'un anneau d'étanchéité

(30) Priorität: 31.03.1993 DE 4310509
(43) Veröffentlichungstag der Anmeldung: 05.10.1994
(73) Patentinhaber: Firma Carl Freudenberg, D-69469 Weinheim (DE)
(72) Erfinder: Freitag, Edgar, D-34613 Schwalmstadt (DE)

(56) Entgegenhaltungen:
- CH-A- 401 503
- CH-A- 462 498
- DE-A- 2 747 262

## Beschreibung

Die Erfindung betrifft ein Verfahren zur Messung der Radialkraft eines Dichtringes für einen Kolben oder eine Stange, der ganz aus elastisch verformbarem, polymerem Werkstoff besteht, der zur Verwendung in einem Einbauraum bestimmt ist und in radialer Richtung einerseits durch eine statisch beanspruchte Dichtfläche begrenzt ist und andererseits durch eine dynamisch beanspruchte Dichtfläche.

Ein solches Verfahren ist aus der DE-PS 15 73 500 bekannt. Die Dichtungselemente werden auf zwei austauschbaren Meßbacken gehalten, von denen einer relativ beweglich zum anderen angeordnet ist. Die von der zu messenden Kraft abhängige Auslenkung des relativ beweglichen Meßbackens wird durch ein Meßgerät erfaßt. Dabei ist allerdings darauf zu achten, daß die Radialkraft durch ein Verschieben des federgelagerten, relativ beweglichen Meßbackens gemessen wird, wobei der Dichtring vom Nenndurchmesser auf einen Durchmesser gedehnt/gestaucht wird, so daß der Durchmesser dem Kräftegleichgewicht zwischen der Feder und der Vorspannkraft der Dichtung entspricht. Dadurch wird die Radialkraft nicht bei den Nenneinbaumaßen gemessen. Die gemessene Federkraft ist kleiner als die Radialkraft, die notwendig ist, die Dichtung auf die Nenneinbaumaße zu verpressen.

Der Erfindung liegt die Aufgabe zugrunde, ein Verfahren der vorbekannten Art derart weiterzuentwickeln, daß die Kraft ermittelt werden kann, die notwendig ist, die Dichtung auf die Nenneinbaumaße zu verpressen.

Diese Aufgabe wird erfindungsgemäß mit den Merkmalen von Anspruch 1 gelöst. Auf vorteilhafte Weiterbildungen nehmen die Unteransprüche Bezug.

Im Rahmen der vorliegenden Erfindung ist es vorgesehen, daß der Dichtring mit Hilfe einer die Abmessungen des Einbauraums aufweisenden Kalibriereinrichtung elastisch verformt wird, die die statisch beanspruchte Dichtfläche mit einer rotationssymmetrischen Gegenfläche und die dynamisch beanspruchte Dichtfläche mit einem an einer Umfangsstelle angreifenden Maßbacken berührt und daß die von dem Dichtring in den Meßbacken eingeleitete Radialkraft durch die sich unter den Einbaubedingungen ergebende, elastische Verformung erfaßt wird. Hierbei ist von Vorteil, daß die Messung großer Radialkräfte von Stangen-/Kolbendichtungen und Abstreifern verschiedener Nenndurchmesser ermöglicht wird. Die Radialkraft bezeichnet die Kraft, die notwendig ist, den Dichtring auf sein Nenneinbaumaß in radialer Richtung aufzuweiten oder zu stauch. Entscheidend ist die Aufnahme des Dichtringes mit seiner statisch beanspruchten Dichtfläche in/auf der rotationssymmetrisch gestalteten Gegenfläche, die eine in sich geschlossene Oberfläche aufweist. Dadurch ist ein Ausweichen des vollständig aus elastisch verformbarem polymerem Werkstoff bestehenden Dichtringes in radialer Richtung ausgeschlossen, so daß dadurch die Radialkraft gemessen wird, die sich bei Nenneinbaumaßen ergibt. Das Meßergebnis wird nicht mehr verfälscht.

Zum Messen der Radialkraft von Stangendichtungen ist es vorgesehen, daß der Dichtring für die Stange mit seiner statisch beanspruchten Außenumfangsfläche in eine hohlzylinderförmige und in sich geschlossene Aufnahme eingepreßt wird, daß der Dichtring und die Aufnahme auf eine in Längsrichtung geteilte Stange aufgeschoben werden und der Dichtring die Stange mit seiner dynamisch beanspruchten Dichtfläche umschließt, daß ein Stangenteil relativ zum anderen Stangenteil in radialer Richtung beweglich ist und daß der relativ bewegliche Stangenteil, der als Meßbacke ausgebildet ist, so lange radial nach außen verschoben wird, bis die dynamisch beanspruchte Dichtfläche den Nenndurchmesser, der sich unter Einbaubedingungen ergibt, erreicht hat. Die in sich geschlossene Aufnahme entspricht beispielsweise in ihren Abmessungen einer Gehäusebohrung, in die der Dichtring während seiner bestimmungsgemäßen Verwendung eingesetzt wird und eine durch die Gehäusewandung führende Stange umfangsseitig dichtend umschließt. Durch das erfindungsgemäße Verfahren werden Meßergebnisse bezüglich der Radialkraft des Dichtringes erzielt, die exakt die Verhältnisse der Praxis wiederspiegeln. Um Dichtringe für Stangen prüfen zu können, die unterschiedliche Innen- und/oder Außendurchmesser aufweisen sind sowohl die in sich geschlossene Aufnahme als auch die in Längsrichtung geteilte Stange auswechselbar.

Zur Prüfung von Kolbendichtungen wird der Dichtring für den Kolben mit seiner statisch beanspruchten Innenumfangsfläche auf eine zylinderförmige Stange aufgepreßt, wobei der Dichtring und die Stange in eine in Längsrichtung geteilte hohlzylinderförmige Aufnahme eingelegt werden und der Dichtring die Innenumfangsfläche der Aufnahme mit seiner dynamisch beanspruchten Dichtfläche außenumfangsseitig berührt. Ein Aufnahmeteil ist relativ zum anderen Aufnahmeteil in radialer Richtung beweglich, wobei das relativ bewegliche Aufnahmeteil als Meßbacken ausgebildet ist und so lange radial nach innen verschoben wird, bis die dynamisch beanspruchte Dichtfläche den Nenndurchmesser, der sich unter Einbaubedingungen ergibt, aufweist. Die zylinderförmige Stange hat eine in sich geschlossene Oberfläche und weist genau die Maße auf, die dem Nutgrund des Kolbens entsprechen, in dem der Dichtring später bestimmungsgemäß verwendet wird. Durch die in ihrer radialen Weite verstellbare, hohlzylinderförmige Aufnahme, die die dynamsiche Dichtfläche anliegend berührt, wird der Durchmesser der Aufnahmebohrung für den Kolben simuliert, gegen den der Dichtring abdichtet.

Die Radialkraft, die auf den Dichtring ausgeübt wird, wird von einer Kraftmeßdose aufgenommen und über einen Verstärker auf ein Aufzeichnungsgerät übertragen. In Abhängigkeit von den zu erwartenden Kräften können sowohl die Kraftmeßdose als auch der Verstärker dem jeweiligen Meßbereich angepaßt werden.

Der Verschiebeweg des relativ beweglichen Meßbackens wird bevorzugt von einem induktiven Wegaufnehmer gemessen, wobei der Wegaufnehmer mit einem Verstärker und einem Aufzeichnungsgerät signalleitend verbunden ist und wobei das Aufzeichnungsgerät bei Erreichen des Nenndurchmessers der dynamischen Dichtfläche, der sich unter Einbaubedingungen ergibt, s = 0 anzeigt. Die Verwendung davon abweichender Meßaufnehmer ist ebenfalls möglich, wobei der Vorteil der induktiven Wegaufnehmer darin zu sehen ist, daß sie keinen negativen Einfluß auf die Meßgenauigkeit des Verfahrens haben, da sie berührungsfrei arbeiten.

Das Verfahren wird nachfolgend anhand der Zeichnungen näher beschrieben.

In Fig. 1 ist ein Ausführungsbeispiel eines Radialkraftmeßgeräts in geschnittener Darstellung gezeigt.

In Fig. 2 ist das Radialkraftmeßgerät aus Fig. 1 in einer Draufsicht dargestellt.

In den Fig. 3 und 4 ist jeweils die Aufnahmevorrichtung zur Radialkraftmessung des Dichtringes gezeigt, wobei in Fig. 3 der Dichtring als Stangendichtung und in Fig. 4 als Kolbendichtung ausgebildet ist.

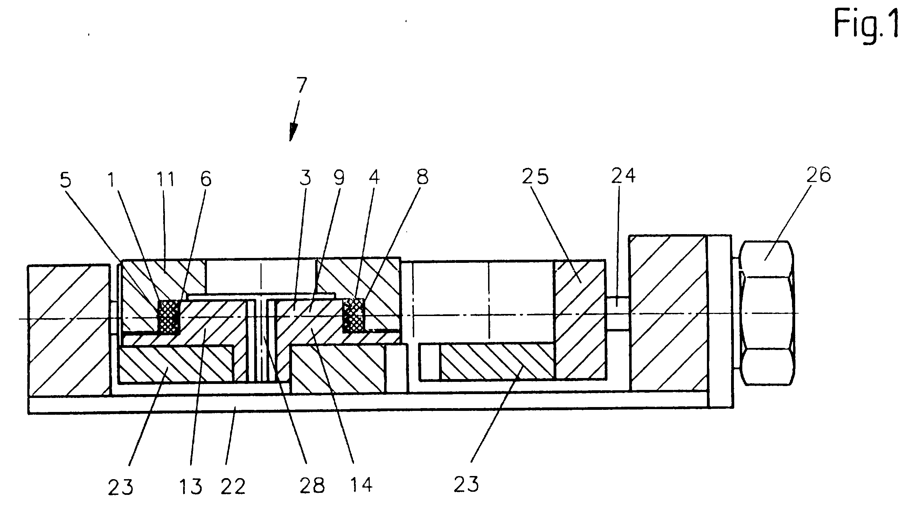

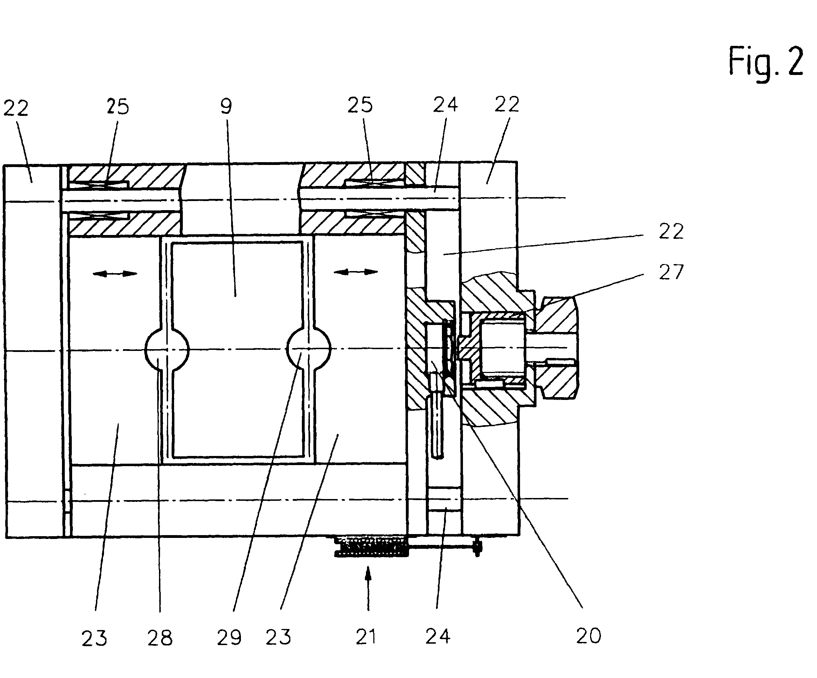

In Fig. 1 ist der Aufbau eines Radialkraftmeßgeräts dargestellt, mit dem das erfindungsgemäße Verfahren durchgeführt werden kann. Das Radialkraftmeßgerät umfaßt ein Gestell 22, auf dem zumindest ein Schlitten 23 in radialer Richtung des Dichtringes 1 auf zwei Führungsstangen 24 relativ beweglich gelagert ist. Der Aufbau des Gestells 22 ist schraubstockähnlich, wobei die beiden Schlitten 23 zur Verringerung der Reibung bei Relativverlagerungen auf Wälzlagern 25 geführt sind. Die Betätigungseinrichtung, durch die die Schlitten 23 verstellbar sind, wird in diesem Ausführungsbeispiel durch eine Stellschraube 26 gebildet die über einen in Fig. 1 nicht gezeigten Betätigungsnocken 27 und eine Kraftmeßdose 20 auf den Schlitten 23 wirkt. Das Radialkraftmeßgerät, das in Fig. 1 gezeigt ist, ist zur Messung der Radialkraft von Dichtringen 1 ausgelegt, die als Stangendichtungen ausgebildet sind. Eine davon abweichende Bestückung zur Aufnahme von Dichtringen, die beispielsweise als Kolbendichtungen ausgebildet sind, ist ebenfalls möglich. Die Betätigungsvorrichtung sowie das Verfahren zur Messung der Radialkraft eines Dichtringes wird, unter Zuhilfenahme der Fig. 1 und 2 wie folgt beschrieben:

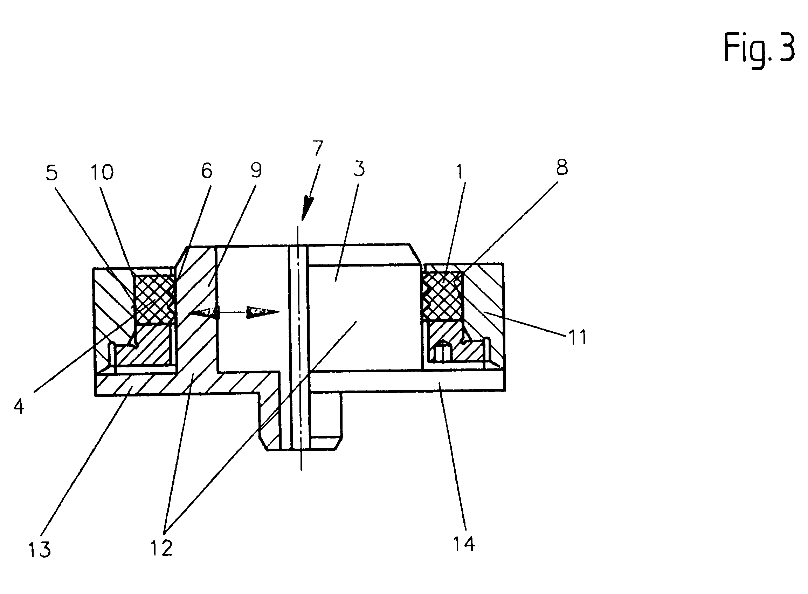

Um die Radialkraft von Dichringen 1 zu ermitteln, die als Stangendichtungen ausgebildet sind, wird in die durch den Schlitten 23 und das Gestell 22 begrenzte Bohrung 28, die in Fig. 3 vergrößert dargestellte, geteilte Stange 12, bestehend aus zwei Stangenteilen 13, 14 eingesetzt. Der eine Stangenteil 13 ist mit dem Schlitten 23 und der andere Stangenteil 14 mit dem Gestell 22 verbunden. Der Dichtring 1 wird in die in sich geschlossene Aufnahme 11 eingefügt. Die Aufnahme 11 und der Dichtring 1 werden nun auf die Stangenteile 13, 14 aufgepreßt. Mittels der Stellschraube 26 wird der Betätigungsnocken 27 auf die Kraftmeßdose 20 gedrückt, wodurch der Schlitten 23 mit dem Stangenteil 13 in radialer Richtung nach außen verschoben wird. Der Schlitten 23 und das Stangenteil 13 werden so lang in radialer Richtung nach außen verschoben, bis der induktive Wegaufnehmer 21 den Weg s = 0 anzeigt; dies entspricht dem Nenndurchmesser der Stange die von der dynamisch beanspruchten Dichtfläche dichtend umschlossen wird. Die gemessene Kraft an der Kraftmeßdose entspricht dann der Radialkraft, mit der die dynamisch beanspruchte Dichtfläche die abzudichtende Stange umschließt.

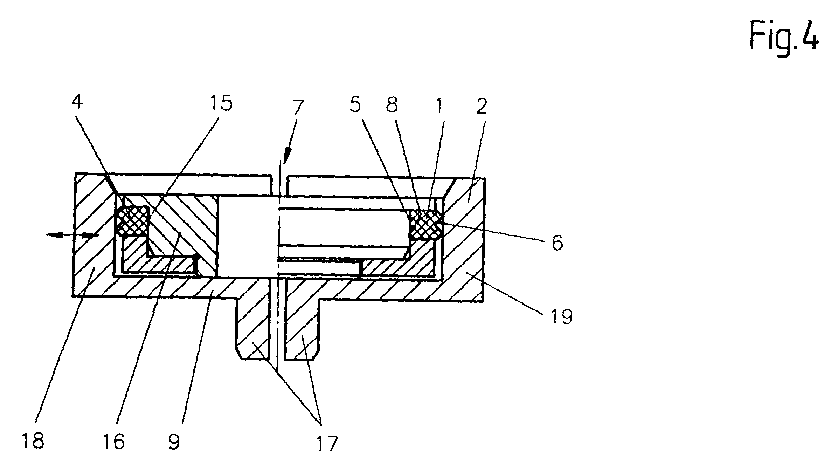

Zur Messeng der Radialkraft von Dichtringen 1, die als Kolbendichtungen ausgebildet sind, wird die Kalibiereinrichtung 7 aus Fig. 4 mit ihren zapfenförmigen Vorsprüngen in die Öffnung 29 eingesetzt und darin zentriert. Zur Prüfung derartiger Dichtringe ist eine geteilte Aufnahme 17 vorgesehen, die zwei Aufnahmeteile 18, 19 umfaßt, wobei das Aufnahmeteil 19 mit dem relativ beweglichen Schlitten 23 und das Aufnahmeteil 18 mit dem relativ unbeweglichen Gestell 22 verbunden ist. Der Dichtring 1 wird auf eine dornförmige, nicht geteilte Stange 16 aufgeschoben, wobei die Stange 16 mit dem Dichtring 1 anschließend in die Aufnahme 17 eingesetzt wird. Zur Ermittlung der Radialkraft werden die beiden Aufnahmeteile 18, 19 in radialer Richtung aufeinander zubewegt, wobei genau dann der Nenndurchmesser der Bohrung, mit dem die dynamisch beanspruchten Dichtflächen in Eingriff bringbar sind erreicht ist, wenn der induktive Wegaufnehmer s = 0 anzeigt. Die gemessene Kraft zum Verpressen auf das Nenneinbaumaß wird durch die Kraftmeßdose gemessen und entspricht der Radialkraft.

Die handelsüblichen Verstärker und die Auswertungselektronik sind in diesen Ausführungsbeispielen nicht dargestellt.

## Patentansprüche

1. Verfahren zur Messung der Radialkraft eine Dichtringes für einen Kolben oder eine Stange, der ganz aus elastisch verformbaren, polymerem Werkstoff besteht, der zur Verwendung in einem Einbauraum bestimmt ist und in radialer Richtung einerseits durch eine statisch beanspruchte Dichtfläche begrenzt ist und andererseits durch eine dynammisch beanspruchte Dichtfläche, dadurch gekennzeichnet, daß der Dichtring (1) mit Hilfe einer die Abmessungen des Einbauraums aufweisenden Kalibriereinrichtung (7) elastisch verformt wird, die die statisch beanspruchte Dichtfläche (5) mit einer rotationssymmetrisch gestalteten Gegenfläche (8) und die dynamisch beanspruchte Dichtfläche (6) mit einem an einer Umfangsstelle angreifenden Meßbacken (9) berührt und daß die von dem Dichtring (1) in den Meßbacken (9) eingeleitete Radialkraft bei der sich unter den Einbaubedingungen ergebenden, elastischen Verformung erfaßt wird.

2. Verfahren nach Anspruch 1, dadurch gekennzeichnet, daß der Dichtring (1) für die Stange (3) mit seiner statisch beanspruchten Außenumfangsfläche (10) in eine hohlzylinderförmige und in sich geschlossene Aufnahme (11) eingepreßt wird, daß der Dichtring (1) und die Aufnahme (11) auf eine in Längsrichtung geteilte Stange (12) aufgeschoben werden und der Dichtring (1) die Stange (12) mit seiner dynamisch beanspruchten Dichtfläche (6) umschließt, daß ein Stangenteil (13) relativ zum anderen Stangenteil (14) in radialer Richtung beweglich ist und daß der relativ bewegliche Stangenteil, der als Meßbacken (9) ausgebildet ist, so lange radial nach außen verschoben wird, bis die dynamisch beanspruchte Dichtfläche (6) den Nennendurchmesser, der sich unter Einbaubedingungen ergibt, erreicht hat.

3. Verfahren nach Anspruch 1, dadurch gekennzeichnet, daß der Dichtring (1) für den Kolben (2) mit seiner statisch beanspruchten Innenumfangsfläche (15) auf eine zylinderförmige Stange (16) aufgepreßt wird, daß der Dichtring (1) und die Stange (16) in eine in Längsrichtung geteilte, hohlzylinderförmige Aufnahme (17) eingelegt werden und der Dichtring (1) die Innenumfangsfläche der Aufnahme (17) mit seiner dynamisch beanspruchten Dichtfläche (6) außenumfangsseitig berührt, daß ein Aufnahmeteil (18) relativ zum anderen Aufnahmeteil (19) in radialer Richtung beweglich ist und daß der relativ bewegliche Aufnahmeteil, der als Meßbacken (9) ausgebildet ist, so lange radial nach innen verschoben wird, bis die dynamisch beanspruchte Dichtfläche (6) den Nenndurchmesser, der sich unter Einbaubedingungen ergibt, erreicht hat.

4. Verfahren nach Anspruch 1 bis 3, dadurch gekennzeichnet, daß die Radialkraft, die auf den Dichtring (1) ausgeübt wird, von eine Kraftmaßdose (20) aufgenommen und über einen Verstärker auf ein Aufzeichnungsgerät übertragen wird.

5. Verfahren nach Anspruch 1 bis 4, dadurch gekennzeichnet, daß der Verschiebeweg des relativ beweglichen Meßbackens (9) von einem induktiven Wegaufnehmer (21) gemessen wird und daß der Wegaufnehmer mit einem Verstärker und einem Aufzeichnungsgerät signalleitend verbunden ist und daß das Aufzeichnungsgerät bei Erreichen des Nenndurchmessers der dynamischen Dichtfläche (6), der sich unter Einbaubedingungen ergibt, s = 0 anzeigt.

## Claims

1. A method for measuring the radial force of a sealing ring for a piston or a rod, which sealing ring consists entirely of an elastically deformable, polymer material, is intended for use in an installation space, and is bounded in the radial direction on one side by a statically loaded sealing surface and on the other side by a dynamically loaded sealing surface, characterized in that the sealing ring (1) is elastically deformed with the aid of a calibrating device (7) which has the dimensions of the installation space and touches the statically loaded sealing surface (5) with a rotationally symmetrically designed counter-surface (8) and touches the dynamically loaded sealing surface (6) with a measuring jaw (9) which acts on a circumferential point, and in that the radial force introduced into the measuring jaw (9) by the sealing ring (1) is recorded during the elastic deformation resulting under the installation conditions.

2. A method according to claim 1, characterized in that the sealing ring (1) for the rod (3) is pressed with its statically loaded outside circumferential surface (10) into a hollow-cylindrical, self-contained receiving device (11), in that the sealing ring (1) and the receiving device (11) are fitted onto a rod (12) which is divided in the longitudinal direction, and the sealing ring (1) surrounds the rod (12) with its dynamically loaded sealing surface (6), in that one rod part (13) is movable in the radial direction relative to the other rod part (14), and in that the relatively movable rod part, which is designed as a measuring jaw (9), is displaced radially outwards until the dynamically loaded sealing surface (6) has reached the nominal diameter which results under installation conditions.

3. A method according to claim 1, characterized in that the sealing ring (1) for the piston (2) is pressed with its statically loaded inside circumferential surface (15) onto a cylindrical rod (16), in that the sealing ring (1) and the rod (16) are inserted into a hollow-cylindrical receiving device (17) which is divided in the longitudinal direction, and the sealing ring (1) touches the inside circumferential surface of the receiving device (17) with the outside circumference of its dynamically loaded sealing surface (6), in that one part (18) of the receiving device is movable in the radial direction relative to the other part (19) of the receiving device, and in that the relatively movable part of the receiving device, which is designed as a measuring jaw (9), is displaced radially inwards until the dynamically loaded sealing surface (6) has reached the nominal diameter which results under installation conditions.

4. A method according to any of claims 1 to 3, characterized in that the radial force which is exerted on the sealing ring (1) is picked up by a load cell (20) and is transmitted via an amplifier to a recording device.

5. A method according to any of claims 1 to 4, characterized in that the displacement path of the relatively movable measuring jaw (9) is measured by an inductive displacement sensor (21), and in that the displacement sensor is connected in a signal-conducting manner to an amplifier and a recording device, and in that the recording device displays s = 0 when the nominal diameter of the dynamic sealing surface (6) which results under installation conditions has been reached.

## Revendications

1. Méthode de mesure de la force radiale d'un anneau d'étanchéité pour un piston ou une tige, lequel anneau d'étanchéité est entièrement en matériau polymère déformable, destiné à l'utilisation dans un logement et limité dans le sens radial d'une part par une surface d'étanchéité soumise à des contraintes statiques et d'autre part par une surface d'étanchéité soumise à des contraintes dynamiques, caractérisée en ce que l'anneau d'étanchéité (1) est déformé élastiquement à l'aide d'un dispositif de calibrage (7) ayant les dimensions du logement, qui touche la surface d'étanchéité (5) soumise à des contraintes statiques avec une contre-surface (8) à symétrie de révolution et la surface d'étanchéité (6) soumise à des contraintes dynamiques avec un organe de mesure (9) appliqué à un point circonférentiel et en ce que la force radiale introduite dans l'organe de mesure (9) par l'anneau d'étanchéité (1) est mesurée lors de la déformation élastique due aux conditions de montage.

2. Méthode selon la revendication 1, caractérisée en ce que l'anneau d'étanchéité (1) pour la tige (3) est enfoncé avec sa surface circonférentielle extérieure (10), soumise à des contraintes statiques, dans un logement (11) en forme de cylindre creux et entièrement fermé, en ce que l'anneau d'étanchéité (1) et le logement (11) sont enfilés sur une tige (12) divisée dans le sens longitudinal et l'anneau d'étanchéité (1) enveloppe la tige (12) avec sa surface d'étanchéité (6) soumise à des contraintes dynamiques, en ce qu'une partie de tige (13) est mobile par rapport à l'autre partie de tige (14) dans le sens radial et en ce que la partie de tige relativement mobile, exécutée sous forme d'organe de mesure (9) est déplacée radialement vers l'extérieur jusqu'à ce que la surface d'étanchéité (6) soumise à des contraintes dynamiques ait atteint le diamètre nominal dû aux conditions de montage.

3. Méthode selon la revendication 1, caractérisée en ce que l'anneau d'étanchéité (1) pour le piston (2) est forcé avec sa surface circonférentielle intérieure (15) soumise à des contraintes statiques sur une tige (16) cylindrique, en ce que l'anneau d'étanchéité (1) et la tige (16) sont placés dans un logement (17) en forme d'un cylindre creux, divisé dans le sens longitudinal, et l'anneau d'étanchéité (1) touche la surface circonférentielle intérieure du logement (17) au niveau de la circonférence extérieure avec sa surface d'étanchéité (6) soumise à des contraintes dynamiques, en ce qu'une partie de logement (18) est mobile par rapport à l'autre partie de logement (19) dans le sens radial, et en ce que la partie de logement relativement mobile, exécutée sous forme d'organe de mesure (9), est déplacée radialement vers l'intérieur jusqu'à ce que la surface d'étanchéité (6) soumise à des contraintes dynamiques ait atteint le diamètre nominal dû aux conditions de montage.

4. Méthode selon l'une des revendications 1 à 3, caractérisée en ce que la force radiale qui est exercée sur l'anneau d'étanchéité (1) est détectée par une boîte dynamométrique (20) et est transmise à un dispositif d'enregistrement via un amplificateur.

5. Méthode selon l'une des revendications 1 à 4, caractérisée en ce que le déplacement de l'organe de mesure (9), relativement mobile, est mesuré par un capteur inductif de déplacement (21) et en ce que le capteur de déplacement est relié à un amplificateur et à un dispositif d'enregistrement de manière à conduire des signaux, et en ce que le dispositif d'enregistrement, lors de l'atteinte du diamètre nominal de la surface d'étanchéité dynamique (6) dû aux conditions de montage, affiche s=0.
